## Europäisches Patentamt

## European Patent Office

## Office européen des brevets

(19)

(11) Veröffentlichungsnummer: **0 142 048**
**B1**

(12) **EUROPÄISCHE PATENTSCHRIFT**

(45) Veröffentlichungstag der Patentschrift:
10.08.88

(51) Int. Cl.⁴: **G 01 F 1/58**

(21) Anmeldenummer: **84112335.9**

(22) Anmeldetag: **12.10.84**

(54) **Induktiver Durchflussmesser.**

(30) Priorität: **12.10.83 DE 3337151**

(43) Veröffentlichungstag der Anmeldung:
**22.05.85 Patentblatt 85/21**

(45) Bekanntmachung des Hinweises auf die Patenterteilung:
**10.08.88 Patentblatt 88/32**

(84) Benannte Vertragsstaaten:
**BE CH FR GB LI NL SE**

(56) Entgegenhaltungen:
**DE-A-2 330 593**
**DE-A-2 454 469**
**DE-A-2 505 427**
**DE-B-1 098 221**

**PATENTS ABSTRACTS OF JAPAN, Band 8, Nr. 45 (P-257) 1482 , 28. Februar 1984; & JP - A - 58 196 419 (YOKOGAWA DENKI SEISAKUSHO K.K. et al.) 15.11.1983**

(73) Patentinhaber: **Fischer & Porter GmbH, Postfach 1843 Dransfelder Strasse 2, D-3400 Göttingen 1 (DE)**

(72) Erfinder: **Appel, Eggert, Imbser Weg 1, D-3402 Dransfeld (DE)**
Erfinder: **Geisler, Gottfried, Olenhuser Weg 6, D-3400 Göttingen (DE)**
Erfinder: **Kiene, Wilfried, Fuchsberg 33, D-3510 Hann- Münden 21 (DE)**

(74) Vertreter: **Weickmann, Heinrich, Dipl.- Ing., Patentanwälte Dipl.- Ing. H.Weickmann Dipl.- Phys.Dr. K.Fincke Dipl.- Ing. F.A.Weickmann Dipl.- Chem. B. Huber Dr.- Ing. H. Liska Dipl.- Phys.Dr. J. Prechtel Postfach 860820, D-8000 München 86 (DE)**

EP 0 142 048 B1

## Beschreibung

Die Erfindung betrifft einen induktiven Durchflußmesser nach dem Oberbegriff des Anspruchs 1.

Induktive Durchflußmesser dieser Art sind nach der DE-A-2 454 469 und DE-A-2 505 427 bekannt. Bei diesen Durchflußmessern besteht das Meßrohr aus nichtmagnetisierbarem Metall, und die Meßelektrode sowie die Schirmelektroden sind in einer elektrisch isolierenden Auskleidung des Meßrohrs eingebettet. Die Einbettung der Meßelektroden und der Schirmelektroden bei den bekannten induktiven Durchflußmessern führt dazu, daß sich im Bereich der Elektroden Spalt- und Haarrisse bilden können, was zu einer Mikrofonie führt, die eine zuverlässige Auswertung der von den Meßelektroden abgegebenen Signale unmöglich machen kann. Ausserdem führen schon geringfügige Unterdruckbelastungen des Meßrohrs zum Ablösen der Elektroden, insbesondere wenn diese in Fluor-Karbon-Verbindungen eingebettet sind, da solche Fluor-Karbon-Verbindungen schlecht an anderen Materialien haften. Gerade Fluor-Karbon-Verbindungen und ähnliche Verbindungen werden aber aus Gründen der chemischen Resistenz häufig als Auskleidungswerkstoffe benötigt. Ein weiterer Nachteil ist, daß bei den bekannten induktiven Durchflußmessern die Schirmelektroden die Meßelektroden nicht ausreichend abdecken, um eine kapazitive Streuung der Meßelektroden zum Meßrohr gänzlich zu vermeiden. Eine Vergrößerung der Überdeckung ist bei den bekannten induktiven Durchflußmessern häufig nicht möglich, da der nicht abgedeckte Winkelbereich des Meßrohrs zur Aufnahme eines Magnetsystems benötigt wird.

Zusätzlich tritt bei bekannten induktiven Durchflußmessern häufig im Übertragungskabel zwischen den Meßelektroden und einem örtlich entfernt angeordneten Impedanzwandler schon bei geringen Vibrationen des Meßrohrs eine Relativbewegung im Übertragungskabel und wegen der erforderlichen hohen Eingangsimpedanz des Impedanzwandlers ebenfalls Mikrofonie auf.

Der Erfindung liegt die Aufgabe zugrunde, beim induktiven Durchflußmesser nach dem Oberbegriff des Anspruchs 1 eine störunanfälligere Übertragung und Auswertung der von den Meßelektroden gelieferten Signale zu erreichen, insbesondere Mikrofonie zu unterbinden.

Die Lösung dieser Aufgabe ist im Kennzeichen des Anspruchs 1 angegeben.

Aus der DE-B-1 098 221 ist für sich ein induktiver Durchflußmesser bekannt, dessen Meßrohr aus galvanisierbarer Keramik besteht, auf die eine metallische Abschirmung aufgalvanisiert ist.

Beim erfindungsgemäßen Durchflußmesser sind die Meßelektroden fast um den gesamten Umfang des Meßrohrs durch Schirmelektroden

abgedeckt. Da die Elektroden aufgalvanisiert sind, haben sie eine praktisch vernachlässigbare Dicke (z. B. etwa 10 μm), so daß sie den Raum des Magnetsystems, insbesondere von Erregerspulen, nicht einschränken.

Als Keramik eignet sich besonders Aluminiumoxid.

Bei Anwendung der Erfindung können Streukapazitäten der Meßelektroden ohne Schwierigkeit auf weniger als 0,5 % der Koppelkapazität der Meßelektroden gemindert werden.

Eine besonders sichere Abschirmung erhält man bei einer Ausführung der Erfindung gemäß Anspruch 2 (wenn man auch grundsätzlich die Ränder nur aneinanderzudrücken braucht). Um die eingangs beschriebenen Störungen durch das Übertragungskabel zu vermeiden, ist bevorzugt eine Ausbildung der Erfindung gemäß Anspruch 3 vorgesehen. Dabei werden die Impedanzwandler bevorzugt in Hybridtechnik ausgeführt und entsprechend Anspruch 4 angelötet. Eine weitere Weiterbildung der Erfindung ist im Anspruch 5 definiert.

Im Ergebnis erhält man einen induktiven Durchflußmesser äußerst kompakter Bauweise mit praktisch ungestörten Meßelektrodensignalen.

Bei gut wärmeleitendem Keramiksubstrat der Hybridschaltung erhält man überdies einen sehr guten Temperaturgleichlauf der elektronischen Beuelemente der Impedanzwandler und damit eine gute Signalstabilität.

Mikrofonie tritt aufgrund der Konstruktion keinesfalls mehr auf.

Die Erfindung wird im folgenden an einem Ausführungsbeispiel unter Hinweis auf die beigefügten Zeichnungen beschrieben.

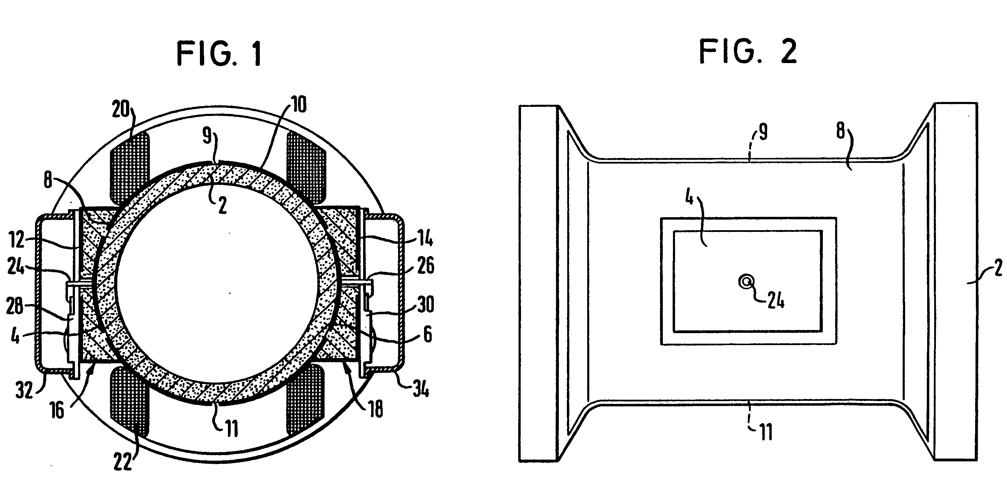

Fig. 1 zeigt einen induktiven Durchflußmesser im Querschnitt;

Fig. 2 zeigt eine Seitenansicht des Meßrohrs des induktiven Durchflußmessers nach Fig. 1 ohne aufgesetzte Trägerkörper für die mittleren Bereiche der Schirmelektroden;

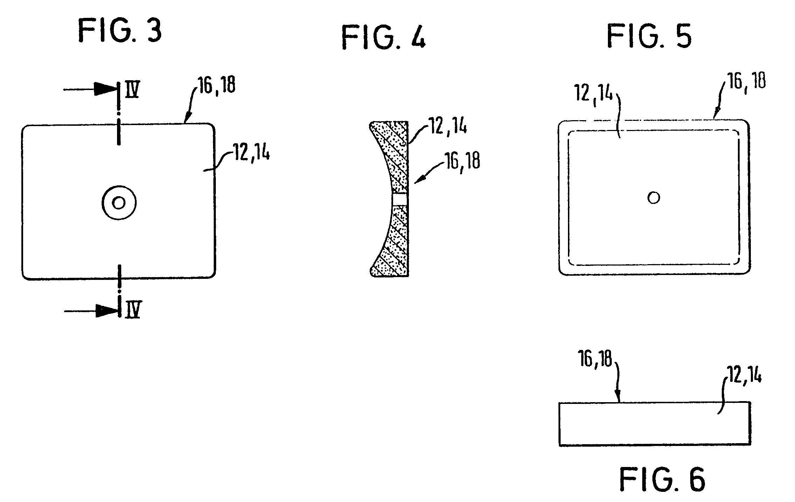

Fig. 3 zeigt einen Trägerkörper für den mittleren Bereich der Schirmelektroden in Ansicht von außen;

Fig. 4 zeigt den Trägerkörper nach Fig. 1 im Schnitt IV-IV in Fig. 3;

Fig. 5 zeigt den Trägerkörper nach Fig. 3 von seiner Innenseite aus;

Fig. 6 zeigt eine Seitenansicht des Trägerkörpers.

Der induktive Durchflußmesser nach dem Ausführungsbeispiel weist ein Meßrohr 2 aus galvanisierbarer Keramik auf. Zwei Meßelektroden 4, 6 sind auf die Außenseiten des Meßrohrs 2 diametral einander gegenüberliegend aufgalvanisiert. Die Meßelektroden 4, 6 umfassende Bereiche 8, 10 von Schirmelektroden 8, 12 und 10, 14 sind ebenfalls auf das Meßrohr 2 aufgalvanisiert. Auf die den Meßelektroden 4, 6 zunächst liegenden Ränder dieser Bereiche 8, 10 sind die Ränder von an dem Meßrohr 2 zu befestigenden Trägerkörpern 16, 18 aus galvanisierbarer Keramik aufgesetzt, auf die die Meßelektroden 4, 6 übergreifende (mittlere) Bereiche 12, 14 der Schirmelektroden 8, 12 und 10, 14 aufgalvanisiert sind. Bevorzugt sind diese Ränder miteinander verlötet.

Zwischen den Trägerkörpern 16, 18 liegen am Umfang des Meßrohrs 2 diametral einander gegenüberliegend Magnetfeldspulen 20, 22 an.

Auf den dem Meßrohr 2 abgewandten Seiten der Trägerkörper 16, 18 sind mit den Meßelektroden 4, 6 über Leitungen 24, 26 verbundene Impedanzwandler 28, 30 angeordnet. Selbstverständlich durchsetzen die Leitungen 24, 26 Durchbrechungen in den mittleren Bereichen 12, 14 der Schirmelektroden 8, 12 und 10, 14. Die Impedanzwandler 28, 30 sind von Abschirmbechern 32, 34 umschlossen. Die Impedanzwandler 28, 30 und die Abschirmbecher 32, 34 sind an den auf den Trägerkörpern 16, 18 befindlichen Bereichen 12, 14 der Schirmelektroden 8, 12 und 10, 14 angelötet.

## Patentansprüche

1. Induktiver Durchflußmesser mit einem Meßrohr (2), zwei diametral zum Meßrohr (2) radial außerhalb der Innenfläche des Meßrohrs (2) angeordneten Meßelektroden (4, 6) und mit die Meßelektroden (4, 6) auf ihrer der Längsachse des Meßrohrs (2) abgewanolten Seite überdeckenden Schirmelektroden (8, 12; 10, 14), dadurch gekennzeichnet, daß das Meßrohr (2) aus galvanisierbarer Keramik besteht, daß die Meßelektroden (4, 6) und die Meßelektroden (4, 6) mit Abstand umfassende Bereiche (8, 10) der Schirmelektroden (8, 12; 10, 14) auf das Meßrohr (2) aufgalvanisiert sind und daß auf die den Meßelektroden (4, 6) zunächst liegenden Ränder dieser Bereiche (8, 10) die Ränder von an dem Meßrohr (2) zu befestigenden Trägerkörpern (16, 18) aus galvanisierbarer Keramik aufgesetzt sind, auf die die Meßelektroden (4, 6) überdeckende Bereiche (12, 14) der Schirmelektroden (8, 12; 10, 14) aufgalvanisiert sind.

2. Durchflußmesser nach Anspruch 1, dadurch gekennzeichnet, daß die Ränder miteinander verlötet sind.

3. Durchflußmesser nach Anspruch 1 oder 2, dadurch gekennzeichnet, daß auf den dem Meßrohr (2) abgewandten Seiten der Trägerkörper (16, 18) mit den Meßelektroden (4, 6) verbundene Impedanzwandler (28, 30) angeordnet und von Abschirmbechern (32, 34) umschlossen sind, die mit den auf den Trägerkörpern (16, 18) befindlichen Bereichen (12, 14) der Schirmelektroden (8, 12; 10, 14) in galvanischem Kontakt stehen.

4. Durchflußmesser nach Anspruch 3, dadurch gekennzeichnet, daß die Impedanzwandler (28, 30) und die Abschirmbecher (32, 34) an die auf den Trägerkörpern (16, 18) befindlichen Bereiche (12, 14) der Schirmelektroden (8, 12; 10, 14) angelötet sind.

5. Durchflußmesser nach einem der vorhergehenden Ansprüche, dadurch gekennzeichnet, daß die auf das Meßrohr (2) aufgalvanisierten Bereiche (8, 10) der Schirmelektroden (8, 12; 10, 14) das Meßrohr (2) beidseitig symmetrisch unter Freilassung zweier diametral einander gegenüberliegender Spalte (9, 11) umfassen.

## Claims

1. An inductive flow meter with a measuring tube (2), two measuring electrodes (4, 6) disposed diametrally relative to the measuring tube (2) and radially outside the inner surface of the measuring tube (2), and with screening electrodes (8, 12; 10, 14) overlapping the measuring electrodes (4, 6) on the side thereof remote from the longitudinal axis of the measuring tube (2), characterised in that the measuring tube (2) consists of ceramic material which can undergo electrodeposition, in that the measuring electrodes (4, 6) and areas (8, 10) of the screening electrodes (8, 12; 10, 14) overlying and spaced from the measuring electrodes (4, 6) are applied to the measuring tube (2) by electrodeposition, and in that the edges of support bodies (16, 18), consisting of ceramic material which can undergo electrodeposition and secured to the measuring tube (2), are attached to the edges of these areas (8, 10) lying next to the measuring electrodes (4, 6), to which support bodies areas (l2, 14) of the screening electrodes (8, 12; 10, 14) overlapping the measuring electrodes (4, 6) are applied by electrodeposition.

2. A flow meter according to Claim 1, characterised in that the edges are soldered to one another.

3. A flow meter according to Claim 1 or 2, characterised in that on the sides of the support bodies (16, 18) remote from the measuring tube (2) there are disposed impedance transducers (28, 30) which are connected to the measuring electrodes (4, 6) and which are enclosed by screening caps (32, 34), these latter being in electrical contact with the areas (12, 14) of the screening electrodes (8, 12 ; 10, 14) situated on the support bodies (16, 18).

4. A flow meter according to Claim 3, characterised in that the impedance transducers (28, 30) and the screening caps (32, 34) are soldered to the areas (12, 14) of the screening electrodes (8, 12; 10, 14) situated on the support bodies (16, 18).

5. A flow meter according to any of the preceding Claims, characterised in that the areas (8, 10) of the screening electrodes (8, 12; 10, 14) applied by electrodeposition to the measuring tube (2) symmetrically overlie the measuring tube (2) on both sides while leaving two diametrically opposed gaps (9, 11).

**Revendications**

1. Débitmètre inductif comprenant un tube de mesure (2), deux électrodes de mesure (4, 6) disposées diamétralement par rapport au tube de mesure (2), radialement à l'extérieur de la surface interne de ce tube de mesure (2), ainsi que des électrodes de protection (8, 12 ; 10, 14) qui recouvrent les électrodes de mesure (4, 6) sur leur côté tourné à l'opposé de l'axe longitudinal du tube de mesure (2), caractérisé par le fait que le tube de mesure (2) est constitué d'une céramique galvanisable; par le fait que les électrodes de mesure (4, 6) et des régions (8, 10) des électrodes de protection (8, 12; 10, 14) ceinturant à distance ces électrodes de mesure (4, 6) sont déposées par galvanisation sur le tube de mesure (2); et par le fait que les bords de corps de support (16, 18) en céramique galvanisable devant être fixés au tube de mesure (2) sont placés sur les bords de ces régions (8, 10) qui sont les plus rapprochés des électrodes de mesure (4, 6), les régions (12, 14) des électrodes de protection (8, 12; 10, 14), qui recouvrent les électrodes de mesure (4, 6), étant déposées par galvanisation sur les bords cités en premier lieu.

2. Débitmètre selon la revendication 1, caractérisé par le fait que les bords sont solidarisés par brasage.

3. Débitmètre selon la revendication 1 ou 2, caractérisé par le fait que des convertisseurs d'impédances (28, 30) raccordés aux électrodes de mesure (4, 6) sont disposés sur les côtés des corps de support (16, 18) qui sont tournés à l'opposé du tube de mesure (2), et sont entourés par des cuvettes de blindage (32, 34) qui sont en contact galvanique avec les régions (12, 14) des électrodes de protection (8, 12; 10, 14) situées sur les corps de support (16, 18).

4. Débitmètre selon la revendication 3, caractérisé par le fait que les convertisseurs d'impédances (28, 30) et les cuvettes de blindage (32, 34) sont brasés sur les régions (12, 14) des électrodes de protection (8, 12; 10, 14) qui se trouvent sur les corps de support (16, 18).

5. Débitmètre selon l'une des revendications précédentes, caractérisé par le fait que les régions (8, 10) des électrodes de protection (8, 12; 10, 14) qui sont déposées par galvanisation sur le tube de mesure (2) ceinturent symétriquement ce tube de mesure (2), de part et d'autre, en réservant deux interstices diamétraux (9, 11) mutuellement opposés.

FIG. 2

FIG. 1

FIG. 3

FIG. 4

FIG. 5

16,18

12,14

16,18

12,14

12,14

16,18

16,18

12,14

FIG. 6

0 142 048